# EUROPÄISCHE PATENTANMELDUNG

(11) **EP 2 213 396 A2**
(43) Veröffentlichungstag der Anmeldung: **04.08.2010**
(21) Anmeldenummer: 10152254.8
(22) Anmeldetag: 01.02.2010
(51) Int. Cl.: B23B 5/08

(54) **Verfahren und Vorrichtung zum Herstellen einer Welle**

(30) Priorität: 03.02.2009 DE 102009007206
(71) Anmelder: Wesa GmbH, 73550 Waldstetten (DE)
(72) Erfinder: Weber, Wolfgang, 73550 Waldstetten (DE)
(74) Vertreter: Alber, Norbert

(57) **Zusammenfassung**

Zum Einsparen des Kaltumformprozesses zur Erzeugung eines grob vorgeformten Rohlings und vor allem der Verbesserung der Maßhaltigkeit des Endproduktes wird die Getriebewelle aus einem zylindrischen Rohling, insbesondere von der Stange ausschließlich mittels spanender Bearbeitung hergestellt. Um dies zu ermöglichen, wird die Befestigungsmöglichkeit für einen in einem Innenumfang des Werkstückes zu haltenden Stab geändert und ebenso die Außenkontur.

## Beschreibung

### I. Anwendungsgebiet

Die Erfindung betrifft Wellen, wie sie insbesondere in Getrieben verwendet werden.

### II. Technischer Hintergrund

Die Erfindung betrifft Wellen, die an ihren beiden Enden jeweils einen entsprechend gestalteten Funktionsbereich besitzen, der bearbeitet werden muss.

Im Folgenden wird daher immer von Getriebewellen gesprochen, ohne die erfindungsgemäßen Wellen auf den Einsatz in einem Getriebe zu beschränken.

Eine solche Getriebewelle weißt häufig in ihrem einen Funktionsbereich eine in Längsrichtung wirkende Axial-Anschlagfläche sowie eine in Umfangsrichtung wirkende eine oder mehrere Umfangs-Anschlagflächen auf, die mit einem weiteren Bauteil zusammenwirken sollen.

Wenn derartige Getriebewellen in großer Stückzahl benötigt werden, ist es üblich, die Welle nicht direkt mittels spanender Bearbeitung, insbesondere Drehen, aus einem zylindrischen Rohling zu fertigen, da dann relativ große Zerspanungsmengen von dem Rohling abgenommen werden müssen.
Stattdessen wird aus einem zylindrischen Zwischenrohling zunächst mittels Kaltumformung in einer Presse einen Rohling hergestellt, der der Kontur des späteren Werkstückes bereits wesentlich genauer entspricht, so dass die anschließend notwendige spanende Materialabnahme wesentlich weniger Material abnehmen muss.

Um den kaltverformten Rohling in einer nachfolgend eingesetzten spanenden Bearbeitung spannen zu können, werden Zentrierbohrungen in den Stirnseiten benötigt, die beim Kaltumformen bereits mit eingepresst werden, um deren Herstellung in einer separaten neuen Einspannung zu vermeiden.

Sofern in einer der Stirnflächen eine zentrale stirnseitige große Vertiefung als Funktionsfläche des fertigen Werkstückes vorhanden sein muss, wird als Zentriermöglichkeit statt einer Zentrierbohrung eine konische Schulter entweder am Eingang oder im weiteren Verlauf der stirnseitigen Sacklochbohrung im Rohling eingearbeitet.

Das Spannen des kalt umgeformten Rohlings auf einem Außendurchmesser ist nicht sinnvoll, da die durch Kaltumformung hergestellte Außenkontur in der Regel relativ ungenau ist.

Der weitere Vorteil des Kaltumformschrittes liegt in einer Verfestigung der Materialstruktur und in einer höheren Belastbarkeit des daraus hergestellten Werkstückes.

Ein weiterer, nicht wahlfreier, sondern zwingender Grund für eine erste Bearbeitung mittels Kaltumformen ist die Tatsache, wenn in einem Innenumfang des Werkstückes in Längsrichtung verlaufende Konturen wie etwa eine Kerbverzahnung eingebracht werden soll, die somit nur durch einen Stoßvorgang in diesem Innendurchmesser des Werkstückes erzeugt werden kann.

Eine derartige Kerbverzahnung wird beispielsweise benutzt, um in dem Innenumfang ein später einzusetzendes anderes Bauteil drehfest zu verankern, indem es axial eingeschoben wird und sich die Zähne der Kerbverzahnung in den Außenumfang des anderen Bauteiles so eingraben, dass sich in Umfangsrichtung eine formschlüssige Sicherung ergibt.

Der Nachteil der Herstellung eines kalt umgeformten Rohlings für die spanende Bearbeitung besteht jedoch darin, dass der kalt umgeformte Rohling in seiner Maßhaltigkeit sehr begrenzt ist und insbesondere die für die weitere Bearbeitung hinsichtlich der Genauigkeit wichtigen Zentrieraufnahmen in den Stirnseiten dabei häufig nicht zueinander fluchten, also nicht auf der Mittelachse des Werkstückes liegen und von Ihrer Ausrichtung her nicht genau auf die Mitte der jeweils anderen Zentrieraufnahme zeigen.

Dies wirkt sich bei der anschließenden spanenden Bearbeitung insofern nachteilig aus, als dort dann keine beliebig gute Genauigkeit hinsichtlich Rundheit und Maßhaltigkeit erreicht werden kann und darüber hinaus ein überproportional hoher Verschleiß an den Werkzeugen, insbesondere auch den Zentrierspitzen, erfolgt.

### III. Darstellung der Erfindung

### a) Technische Aufgabe

Es ist daher die Aufgabe gemäß der Erfindung, ein Verfahren zur kostengünstigen Bearbeitung einer gattungsgemäßen Getriebewelle zu schaffen, sowie die Getriebewelle selbst im Hinblick auf eine optimale Bearbeitbarkeit spezifisch auszubilden.

### b) Lösung der Aufgabe

Diese Aufgabe wird durch die Merkmale der Ansprüche 1 und 7 gelöst. Vorteilhafte Ausführungsformen ergeben sich aus den Unteransprüchen.

Ein kostengünstiges Herstellungsverfahren lässt sich durch die Kombination der folgenden Maßnahmen erreichen:
Als Befestigungsmöglichkeit im Innenumfang wird anstelle einer durch Stoßen herzustellenden Kerbverzahnung eine zylindrische Presspassung gewählt, so dass aus diesem Grund keine zwingende Notwendigkeit für einen Kalt-Umformvorgang mehr besteht und deshalb als Herstellungsverfahren die spanende Bearbeitung vom zylindrischen, nicht umgeformten Rohling - wie etwa einem Stangenmaterial - auf einer Drehmaschine erfolgen kann.

Auch die in axialer Richtung verlaufenden und in Umfangsrichtung wirksamen Umfangs-Anschlagflächen auf der Außenfläche werden auf der gleichen Drehmaschine hergestellt mittels eines in Längsrichtung fahrenden Fingerfräsers, wofür die Drehmaschine über eine gesteuerte C-Achse und angetriebene Werkzeugaufnahme verfügen muss.

Das Werkzeug muss lediglich einmal umgespannt werden, indem zuerst das eine Ende, also der eine Funktionsbereich, fertig bearbeitet und anschließend an diesem bearbeiteten Bereich eine Spannung vorgenommen und der andere Endbereich mit dem anderen Funktionsbereich spanend bearbeitet wird.

Sofern die Drehmaschine über zwei gegeneinander gerichtete Spannfutter verfügt, von denen eines in Z-Richtung verfahrbar ist, erfolgt die gesamte Bearbeitung in ein und derselben Maschine mit automatischer Umspannung von einem in das andere Futter.

Da beim spanenden Arbeiten von einem zylindrischen Rohling aus - wie etwa einem Stangenmaterial - die Maßhaltigkeit des Rohlings an der Außenumfangsfläche höher ist als die bei einem kalt umgeformten Rohling, kann das z. B. Stangenmaterial sofort am Außenumfang gespannt werden, so dass für die spanende Bearbeitung selbst keine Zentrierbohrung benötigt wird, sondern der eine Funktionsbereich, also das eine Ende des frei aus dem Futter auskragenden Werkstückes, ohne Vorzentrierung bearbeitet werden kann.

Auch der zweite Endbereich benötigt für seine Bearbeitung keine Zentrierung, sondern die Welle wird auf dem Außenumfang des bereits bearbeiteten Teiles des Werkstückes gespannt.

Die Maßungenauigkeiten des fertig gestellten Werkstückes und er hohe Werkzeugverschleiß bedingt durch ungenaue Vorzentrierungen fallen damit weg, was den bei der Vorverformung beabsichtigten Vorteil der geringeren zu zerspanenden Materialmenge mehr als kompensiert.

Dabei kommt es natürlich auf die gewünschten Genauigkeiten an, jedoch wird bei Getriebewellen beispielsweise eine Rundlaufgenauigkeit von 3/100 mm gefordert, was bei einer Abweichung der Vorzentrierungen beim kalt umgeformten Rohteil von 2 bis 4/10 mm nur mit hohen Ausschussraten erreichbar ist.

Bei Verzicht auf die Kaltumformung als Vorstufe reduzieren sich somit die Ausschussraten drastisch und gehen gegen Null, was den vermeintlichen Zeitvorteil der geringeren Zerspanungmenge überwiegt.

Des Weiteren wurde bei der vorherigen Vorgehensweise für das Kaltumformen ein Einsatzstahl verwendet, der anschließend einer Einsatzhärtung unterzogen wurde.

Im Gegensatz dazu kann nunmehr - da die Kaltverformbarkeit des Werkstoffes keine Rolle mehr spielt - ein hochwertiger Kohlenstoffstahl wie etwa C 45, insbesondere mit speziellen Zusatzlegierungen oder ZF50, verwendet werden, der keiner Einsatzhärtung im Ganzen mehr bedarf, so dass nach der spanenden Bearbeitung lediglich die benötigten Funktionsbereiche oberflächennah mittels Induktionshärten gehärtet werden, was vorzugsweise auch innerhalb der Drehmaschine und insbesondere in der gleichen Aufspannung wie beim spanenden Bearbeiten durchgeführt werden kann.

Vorzugsweise wird dabei die erste Spannung des Werkstückes am Außenumfang des noch nicht bearbeiteten ersten Funktionsbereiches durchgeführt, damit in einem ersten Bearbeitungsschritt der zweite Funktionsbereich hinsichtlich seiner Außenkontur komplett fertig bearbeitet werden kann - einschließlich der Zentrierbohrung in der Stirnfläche - und somit vorzugsweise derjenige Funktionsbereich fertig bearbeitet ist, der bis auf die Zentrierbohrung keinerlei Innenbearbeitung benötigt.

Dadurch bleibt die Getriebewelle im ersten Funktionsbereich auch nach der Bearbeitung ein Massivteil, dem die anschließende Spannung durch von außen angreifende Spannbacken im zweiten Bearbeitungsschritt nicht schadet und in diesem zweiten Bearbeitungsschritt somit der erste Funktionsbereich einschließlich dessen Innenkontur hergestellt werden kann.

Dabei wird die dortige zentrische Presspassung zunächst durch Bohren in Längsrichtung hergestellt, die anschließend durch Innenausdrehen zentriert wird, da der Bohrer nie 100%ig zentrisch läuft.

Anschließend muss zum Erreichen der gewünschten Genauigkeit für die Presspassung - in der Regel F7 - ein Ausreiben dieser Innenkontur erfolgen, was alles in der gleichen Aufspannung geschieht.

Dabei wird eine konische Schulter entweder am vorderen Ende der Presspassung des Innenumfanges oder am offenen Ende des Innenumfanges hergestellt als Zentrieraufnahme für die Bearbeitung nach dem Spanen.

Des Weiteren werden in dem ersten Funktionsbereich auch radiale Sacklöcher an definierten Stellen des Umfanges eingebracht, die später als formschlüssige Sensoraufnahmen für die Detektion der Drehstellung dieser Getriebewelle im Einsatz dienen.

Auf dem Außenumfang des zweiten Funktionsbereiches soll im Endzustand der Getriebewelle eine Schneckenverzahnung aufgebracht sein.

Diese wird bisher nach Beenden der spanenden Bearbeitung in der Drehmaschine auf einer separaten Verzahnungsmaschine mittels Abwälzfräsen aufgebracht.

Erfindungsgemäß wird dagegen vorgeschlagen, die Schneckenverzahnung mittels Kaltverformung durch Aufwalzen auf dem Außenumfang im zweiten Funktionsbereich aufzubringen, im Idealfall innerhalb der für die Zerspanung benutzen Drehmaschine, in der Regel jedoch in einer separaten Maschine, was mit einem gehärteten Einsatzstahl nicht möglich wäre.

Des Weiteren ist die Aufbringung der Schneckenverzahnung durch Aufwalzen nur deshalb möglich, weil das Werkstück nach der spanenden Bearbeitung der übrigen Funktionsbereiche eine sehr hohe Rundlaufgenauigkeit besitzt, wie sie nach den bisherigen Herstellungsverfahren vom kalt umgeformten Rohling aus nicht erzielbar war.

Das beschriebene, erfindungsgemäße vorteilhafte Herstellungsverfahren ist nur dann möglich, wenn die Getriebewelle (nach der spanenden Bearbeitung) spezifische Gestaltungsmerkmale aufweist:
Die in axialer Richtung verlaufenden Umfangs-Anschlagflächen sind die Seitenwangen einer in axialer Richtung verlaufenden Längsnut, die in der freien Stirnfläche des einen Funktionsbereiches endet und deren Boden nicht an die Umfangskrümmung der Getriebewelle angepasst ist, sondern der - in axialer Richtung betrachtet - eben ist und somit tangential zur axialen Richtung der Getriebewelle.

Aus dem gleichen Grund, nämlich für die Herstellung mittels eines Fingerfräsers, muss die Längsnut an ihrem inneren Ende in der Aufsicht betrachtet ein halbrundes hinteres Ende aufweisen, welches insbesondere in die an dieser Stelle vorhandene Schulter im Außenumfang der Getriebewelle eintaucht.

Die weiteren Gestaltungsvoraussetzungen wie Presspassung im Innenumfang des ersten Funktionsbereiches, konische Schulter im Innenumfang sowie Sacklöcher radial eingebracht im Außenumfang wurden vorstehend bereits beschrieben.

### c) Ausführungsbeispiele

Ausführungsformen gemäß der Erfindung sind im Folgenden beispielhaft näher beschrieben. Es zeigen:
- Fig. 1:: Den Rohling für die spanende Bearbeitung gemäß der bisherigen Vorgehensweise,
- Fig. 2:: das spanend bearbeitete Endprodukt nach der neuen Bearbeitungsweise, und
- Fig. 3:: das einbaufertige Endprodukt.

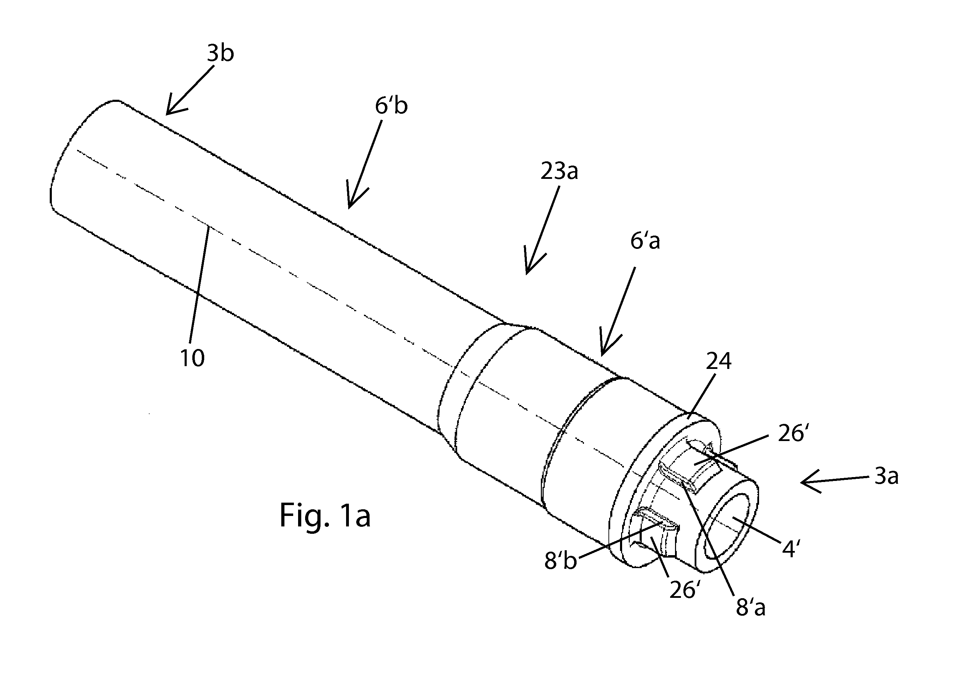

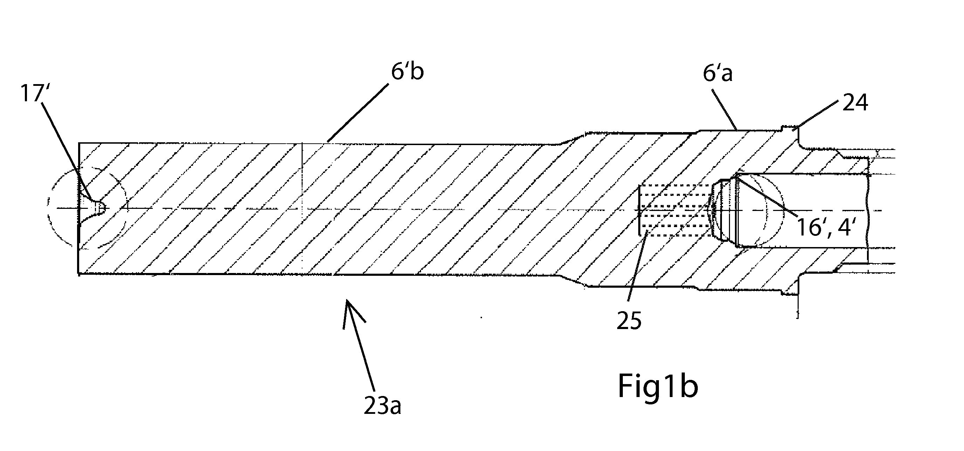

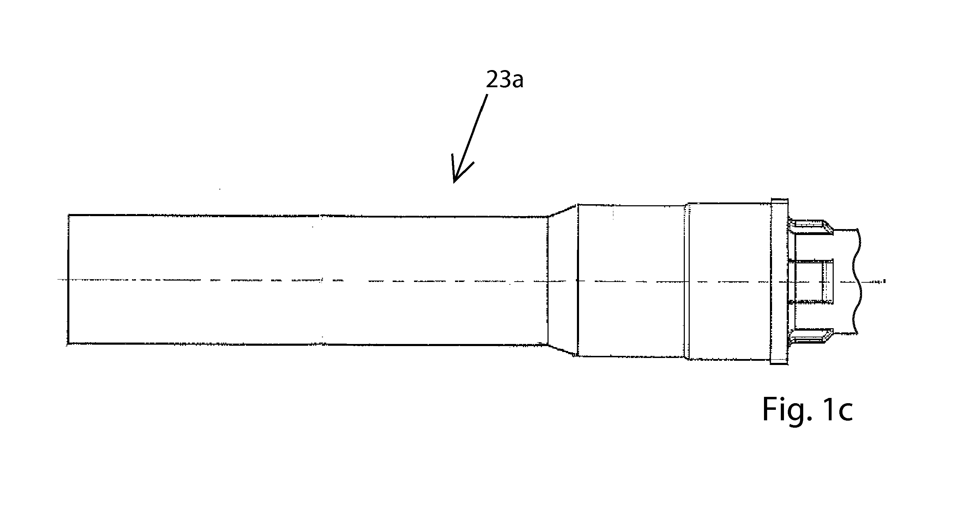

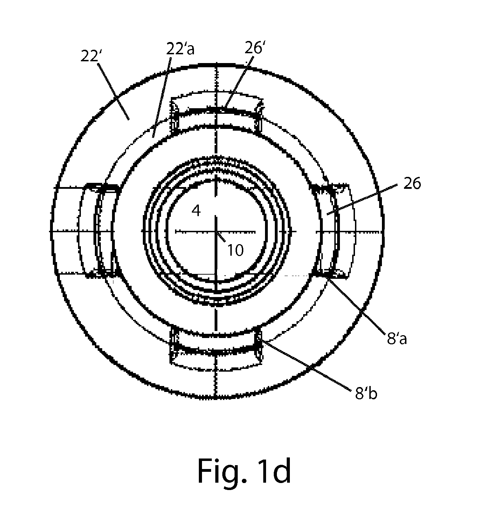

Figur 1 zeigt den kalt umgeformten Rohling für die spanende Bearbeitung, wie er mittels eines Stauchvorganges aus einem zylindrischen Ausgangsmaterial erzeugt wird.

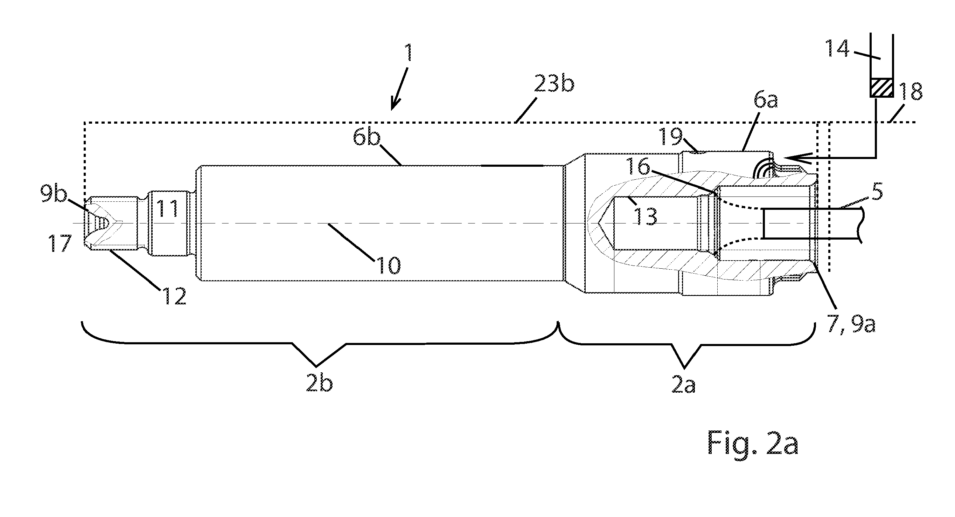

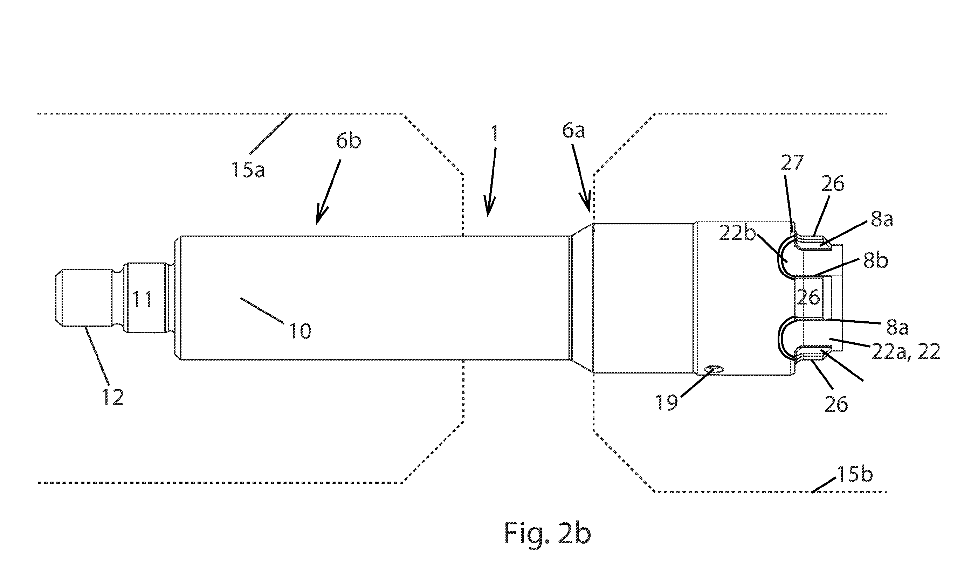

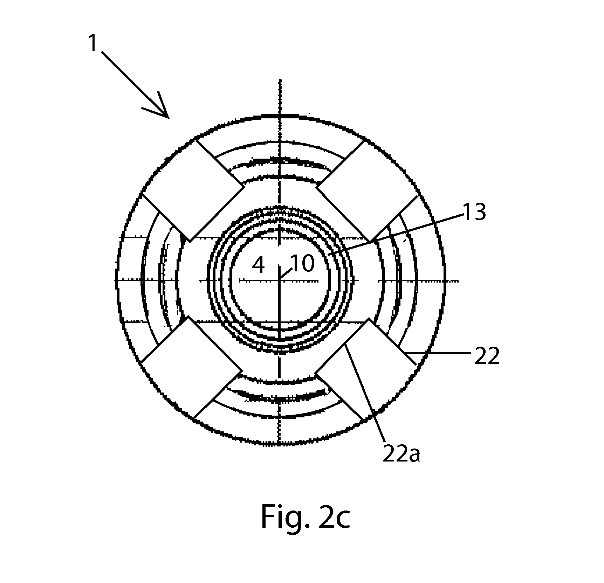

Dabei ist zu sehen, dass die Außenkontur bereits grob der späteren Endkontur entspricht, so dass nur noch vergleichsweise wenig Material mittels Zerspanung von dem Außenumfang abgenommen werden muss, wenn man dies mit dem Endzustand nach dem Zerspanen in Figur 2 vergleicht.

Lediglich am freien Ende 3b des zentrischen Außenumfanges 6'b müssen große Durchmesseraufmaße abgetragen werden.

Auch der zentrische Innenumfang 4' ist bereits vorhanden, jedoch nicht mit seiner vollen Tiefe, sondern nur mit der ersten Stufe und dem größeren Durchmesser, also noch nicht im Bereich der späteren Presspassung, wie in Figur 1b zu erkennen.

Gestrichelt ist dort auch das Kerbzahnprofil 25 eingezeichnet, welches ursprünglich bei diesem Rohling bereits beim Kaltumformen mit erzeugt wurde und zum Einstecken und drehfest Fixieren des nur in Figur 2a eingezeichneten Stabes 5, der als Torsionsstab dient, verwendet wurde.

Die Figuren 1a und 1b zeigen auch den unregelmäßig radial nach außen vorstehenden Wulst 24, der sich beim Stauchen zwischen zwei Formhälften, die in axialer Richtung gegeneinander geführt werden, als Ausgleichsraum für das verdrängte Material des Rohlings benutzt wird.

Wesentlich sind jedoch für die anschließende spanende Nachbearbeitung die beiden Zentrieraufnahmen, nämlich die Zentriervertiefung 17' im Zentrum der linken Stirnfläche und die konisch ringförmige Schulter 16' im Verlauf des Innenumfanges 4', denn diese beiden Zentrieraufnahmen dienen anschließend in der Drehmaschine zur Aufnahme des Bauteiles zwischen Spitzen, um die Außenkontur oder wenigstens einen Teil der Außenkontur mittels Drehen zu bearbeiten, was die Voraussetzung ist, um anschließend auf einem solchen bearbeiteten Außendurchmesser das Werkstück in einem Spannfutter mit außen anliegenden Backen aufnehmen zu können, da die Außenkontur des kalt umgeformten Rohlings hiefür zu ungenau ist.

Dabei ist ersichtlich, dass im Falle eines auch nur geringen Achsversatzes oder nicht fluchtender Ausrichtung dieser beiden Zentrieraufnahmen 16', 17' niemals ein guter Rundlauf des fertig spanend bearbeiteten Welle 1 erzielt werden kann.

Aufgrund der Herstellung dieser Zentrieraufnahmen nicht durch Bohren, sondern ebenfalls durch Kaltumformung während der Stauchung des Werkstückes zu dem Rohling der Figuren 1 sind die Zentrieraufnahmen 16', 17' jedoch niemals so genau, wie für die spätere Aufnahme zwischen Spitzen in einer Drehmaschine für den geforderten Rundlauf notwendig, was unter anderem am relativ großen axialen Abstand der beiden Zentrieraufnahmen liegt, als auch der Tatsache der weit nach innen versetzten Schulter 16', so dass hierfür ein relativ langes und weit auskragendes, dünnes Presswerkzeug benötigt wird, dessen axiale Führung nicht 100%ig sichergestellt werden kann.

Dabei werden auch die Erhebungen 26', deren seitliche Flanken als Umfangs-Anschlagflächen 8'a, 8'b dienen, durch Stoßen hergestellt, indem ein Werkzeug die Nuten 22' dazwischen erzeugt und das dort vorhandene Material durch axialen Stoßen verdrängt.

Um die Menge an zu verdrängendem Material möglichst gering zu halten, ist - wie in Figur 1d zu erkennen - der Boden 22'a dieser Nuten 22 kreisbogenförmig gekrümmt um die axiale Richtung 10 als Krümmungsmittelpunkt, da dies ausreicht, um ein dazwischen an den Umfangs-Anschlagflächen 8'a bzw. 8'b anschlagendes hülsenförmiges Gegenstück frei um die axiale Richtung schwenken zu lassen.

Dabei stellen jedoch ausschließlich die Umfangs-Anschlagflächen 8'a, 8'b den Endzustand des Werkstückes dar, während alle anderen Flächen bei der anschließenden spanenden Bearbeitung nachbearbeitet werden, um die gewünschte Genauigkeit zu erzielen.

Da die Umfangs-Anschlagflächen jedoch lediglich den Schwenkwinkel eines konzentrisch auf die Getriebewelle aufgesteckten weiteren Bauteiles begrenzen sollen, ist deren Genauigkeitsanforderung zum einen gering und zum anderen können Flächen, die in Stoßrichtung eines Kaltumformprozesses verlaufen, wesentlich genauer hergestellt werden, als quer hierzu verlaufende Flächen, vor allem, wenn sie nahe dem einen stirnseitigen Ende - in Stoßrichtung gesehen - liegen und das dafür erforderliche Werkzeug keine lange freie Auskragung besitzen muss.

Die Figuren 2 zeigen dagegen den Endzustand nach der spanenden Bearbeitung. Anhand dieser Figuren 2 wird im Folgenden auch der erfindungsgemäße Verfahrensablauf beschrieben:
Wie Figur 2a zeigt, erfolgt die Fertigung von einem zylindrischen Rohling 23b aus, beispielsweise dem vorderen Ende einer quasi-endlosen Stange 18 aus Rundmaterial, welches gemäß Figur 2b z. B. von rechts durch ein nach hinten offenes Backenfutter 15b für Stangenbearbeitung hindurchgeschoben und daraus nach links frei auskragend gehalten werden kann.

Das in der linken Bildhälfte der Figur 2b gegenüberliegende andere Backenfutter 15a ist dann natürlich nicht in dieser Stellung vorhanden, sondern die gesamte linke Hälfte des späteren Werkstückes ist frei zugänglich, um die dortige Außenkontur komplett fertig zu bearbeiten, einschließlich des Außengewindes 12 und auch einschließlich der in der linken Stirnfläche dargestellten Zentriervertiefung 17, die mittels eines zentrisch angesetzten Bohrers und damit wesentlich genauer als durch den Kaltumformvorgang beim Rohling gemäß Figur 1 erstellt wird.

Nachdem die linke Hälfte hinsichtlich der Außenkontur fertig bearbeitet ist, wird die Getriebewelle 1 - wie in Figur 2b dargestellt - vom rechten Futter 15b an das linke Futter 15a übergeben. Zunächst wird von dem noch endlosen Stangenmaterial 18 das Werkstück durch Plandrehen abgedreht, um den Funktionsbereich 2a auf von seiner Stirnseite her zugänglich zu machen. Nunmehr steht die rechte Hälfte, also der erste Funktionsbereich 2a, frei auskragend aus dem Futter 15a, welches das Werkstück am zentrischen Außenumfang 6b im zweiten Funktionsbereich 2b gespannt hält vor und kann bearbeitet werden.

Zunächst wird in dem ersten Funktionsbereich 2a die Innenkontur hergestellt, in dem der zentrische Innenumfang 4 und die daran anschließende Passung 13 zunächst mit Aufmaß vorgebohrt werden und anschließend mittels Innenlängsdrehen auf Maß bearbeitet werden, wobei auch die Schulter 16, die für nachfolgende Bearbeitungen als Zentrieraufnahme dient, exakt mittels Innendrehen hergestellt wird und damit mit einer wesentlich höheren Genauigkeit als beim Kaltumformgang gemäß Figur 1.

Auf diese Art und Weise ist auch eine exakte Fluchtung der Schulter 16 zur Zentriervertiefung 17 hinsichtlich Achsversatz und Ausrichtung sichergestellt.

Die spätere Presspassung 13 wird zusätzlich nach dem Drehen mittels Reiben, also mit einer Reibahle, feinbearbeitet, um die für eine Presspassung notwendige Genauigkeit, in der Regel F7, zu erreichen.

Anschließend kann nochmals die rechte Stirnfläche 9a überdreht werden, um eine ausreichende Genauigkeit der Länge der Getriebewelle 1 zu erreichen, die beim Abstechen der Stange 18 eventuell noch nicht gegeben war, da dies gleichzeitig die Axial-Anschlagfläche 7 ist, für die eine relativ hohe Genauigkeit gefordert ist.

Erst danach wird die Außenkontur des Funktionsbereiches 2a hergestellt, zunächst rotationssymmetrisch vorgeformt mittels Drehen, im Bereich der Erhebungen 26 abgedreht bis auf deren Außendurchmesser.

Anschließend müssen die nicht-rotationssymmetrischen Teile dieser Außenkontur hergestellt werden:
Zum einen sind dies die über den Umfang in dem zentrischen Außenumfang 6a angeordneten Radialbohrungen 19, wofür ein radial angreifender Bohrer verwendet wird und die Getriebewelle 1 mittels der gesteuerten C-Achse in die richtige Drehlage zum Werkzeug, also dem Bohrer, gebracht wird.

Ebenfalls bei nicht rotierender, stillstehender Getriebewelle wird ein radial gegen die Getriebewelle 1 vorstehender Fingerfräser 14 auf die gewünschte radiale Tiefe herangefahren und in dieser Stellung - wie in Figur 2a ersichtlich - in den Außenumfang axial eingefahren und dadurch die Nuten 22 erzeugt, deren seitliche Flanken 8a, b die Funktionsflächen sind.

Da der Fingerfräser 14 eine ebene Stirnfläche besitzt, ist der Boden 22a der Nut 22 eben und nicht bogenförmig gekrümmt, wie in Figur 2c zu erkennen, was jedoch unerheblich ist, da der Boden keine Funktionsfläche ist und diese Formgebung keine Kollision mit einem aufzusetzenden hülsenförmigen Gegenstück bewirken kann.

Wie die Figuren 2a und 2b zeigen, ist das hintere Ende 22b der Nut 22 in der Aufsicht betrachtet halbrund entsprechend der runden Umfangskontur des erzeugenden Fingerfräsers 14.

Um die volle Länge der Umfangs-Anschlagflächen 8a, b bis zur Schulter 27 zur Verfügung zu haben, wird mit dem Fingerfräser 14 in Längsrichtung 10 vorwärtsgefahren, bis sich die Mitte des Fingerfräsers 14 axial auf Höhe der Schulter 27 befindet.

Dadurch sind im größten Außendurchmesser der Getriebewelle halbrunde Ausfräsungen, nämlich die halbrunden Enden 22b, vorhanden, die jedoch für die spätere Funktion nicht stören, da weder dieser Außenumfang noch die Schulter 27 Funktionsflächen sind und auch die Stabilität des Werkstückes dadurch nicht nachteilig beeinflusst wird.

Damit ist die spanende Bearbeitung der Getriebewelle fertig gestellt, auf die nunmehr - in der Regel auf einer separaten Maschine mittels Abwälzfräsen - eine Schneckenverzahnung 20 im zweiten Funktionsbereich 2b, nämlich auf dem dortigen zentrischen Außenumfang 6b, erstellt wird.

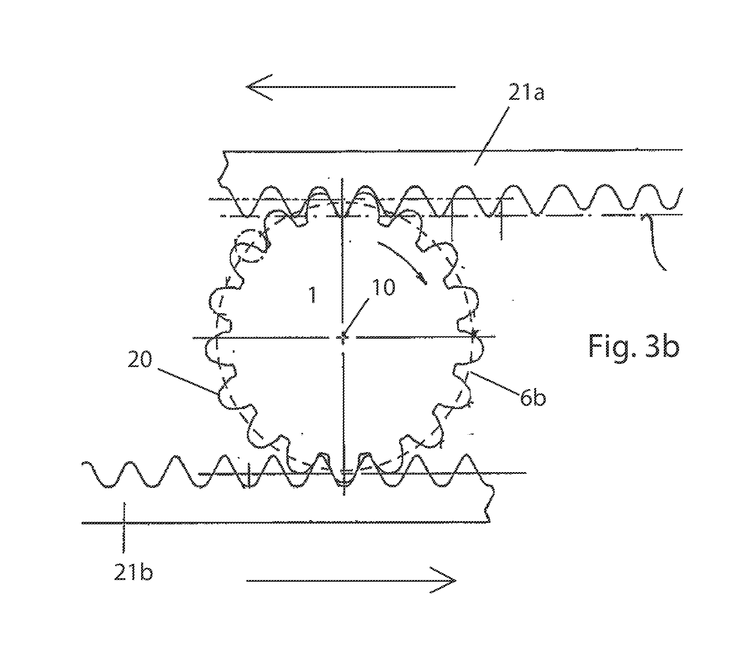

Erfindungsgemäß wird jedoch vorgeschlagen, diese Schneckenverzahnung 20 zwar ebenfalls in einer separaten Maschine, jedoch nicht mittels Abwälzfräsen durch einen rotierenden Fräser herzustellen, sondern durch Kaltumformung, indem die Schneckenverzahnung 20 aufgerollt wird gemäß Figur 3b:

Dabei rollt die Getriebewelle 1 mit ihrem zentrischen Außenumfang 6b zwischen zwei Profilleisten 21 a, b ab, die tangential an diesem Umfang auf gegenüberliegenden Seiten anliegen und in ihrer Längsrichtung gegeneinander bewegt werden und durch die Anpresskraft an der Getriebewelle 1 die auf ihrer Kontaktseite aufgebrachte Zahnform in den Außenumfang 6b der Getriebewelle 1 einpressen.

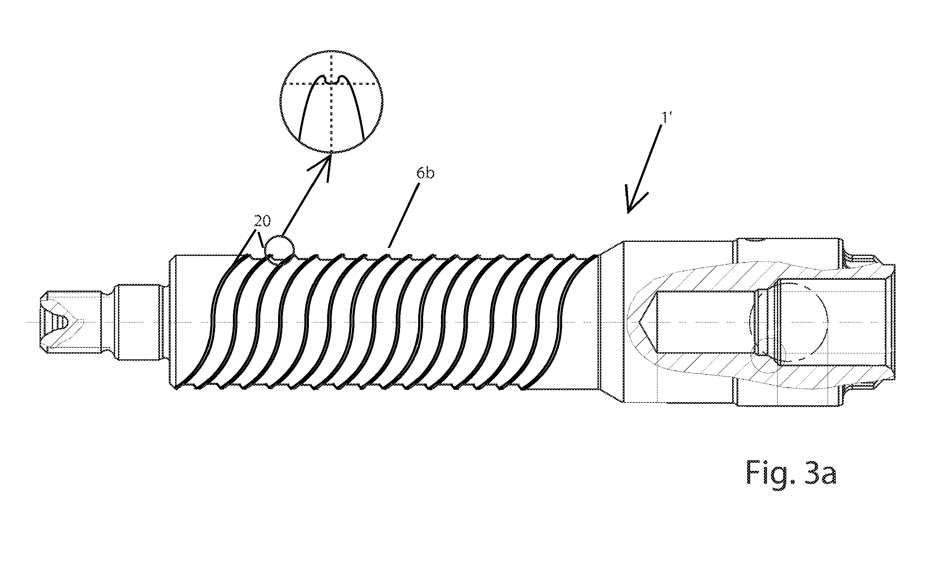

Da hierbei aus den Vertiefungen der Verzahnung 20 das Material entlang der Flanken nach oben geschoben wird, entstehen am höchsten Punkt der Zähne in der Regel im Querschnitt betrachtet zwei radial überstehende Doppelspitzen, wie in Figur 3a an einem Zahn angedeutet, die anschließend bei Bedarf jedoch durch einen Dreh- oder Fräsvorgang abgetragen werden können. Die Zahnflanken jedoch, die als Funktionsflächen von Bedeutung sind, sind ausreichend exakt geformt.

### BEZUGSZEICHENLISTE

- 1: Getriebewelle
- 1': einbaufertige Getriebewelle
- 2a: erster Funktionsbereich
- 2b: zweiter Funktionsbereich
- 3a, b: Ende
- 4, 4': zentrischer Innenumfang
- 5: Stab
- 6a, b, 6'a, b: zentrischer Außenumfang
- 7: Axial-Anschlagfläche
- 8a, b: Umfangs-Anschlagfläche
- 9a, b: freie Stirnfläche
- 10: axiale Richtung, Drehachse
- 11: Außenumfangsfläche
- 12: Außengewinde
- 13, 13': Presspassung
- 14: Fingerfräser
- 15a, b: Spannfutter
- 16, 16': Schulter
- 17, 17': Zentriervertiefung
- 18: Stange
- 19: Radialbohrung
- 20: Schneckenverzahnung
- 21a, b: Profilleiste
- 22, 22': Längsnut
- 22a: Boden
- 22b: halbrundes Ende
- 23a: kaltgeformter Rohling
- 23b: zylindrischer Rohling
- 24: Wulst
- 25: Kerbzahnprofil
- 26, 26': Erhebungen
- 27: Schulter

## Patentansprüche

1. Verfahren zum Herstellen einer Getriebewelle (1) mit einem Funktionsbereich (2a, b) an jedem seiner beiden Enden (3a, b)
- wobei der erste Funktionsbereich (2a)
- einen zentrischen Innenumfang (4) mit einer Befestigungsmöglichkeit für einen darin aufzunehmenden Stab (6) umfasst sowie
- einen zentrischen Außenumfang (4) mit einer Axial-Anschlagfläche an der freien Stirnfläche (9a), die in Umfangsrichtung verläuft, sowie Umfangs-Anschlagflächen (7), die in axialer Richtung (10) verlaufen und in der freien Stirnfläche münden
- wobei der zweite Funktionsbereich (2b) wenigstens eine zentrische Außen-Umfangsfläche (11) als Lagerstelle sowie ein zentrisches Außen-Gewinde (12) als Befestigungsgewinde aufweist,
**dadurch gekennzeichnet, dass**
- die in axialer Richtung verlaufenden Umfangs-Anschlagflächen (8a, b) durch Einfahren eines mit seiner Rotationsachse lotrecht auf der Drehachse (10) der Getriebewelle (1) stehenden Finger-Fräsers (14) in den Außen-Umfang in axialer Richtung (10) von der freien Stirnseite (9a) her erfolgt und
- als Herstellungsverfahren das Drehen, Bohren, Fräsen und Reiben auf nur einer Drehmaschine mit gesteuerter C-Achse und zwei gegeneinander gerichteten Spannfuttern (15a, b) gewählt wird.

2. Verfahren nach Anspruch 1,
**dadurch gekennzeichnet, dass**
- als Befestigungsmöglichkeit im Innenumfang eine zentrische, zylindrische Press-Passung (13) eingebracht wird und/oder
- am Innenumfang, insbesondere am Beginn der Press-Passung (13), eine konische Schulter (16) mittels Drehen als Zentrierung für die Weiterbearbeitung des Werkstückes hergestellt wird.

3. Verfahren nach einem der vorhergehenden Ansprüche,
**dadurch gekennzeichnet, dass**
- bei der Herstellung des zweiten Funktionsbereiches (2b) in der Stirnseite eine Zentriervertiefung (17), insbesondere mittels Drehen, hergestellt wird, und/oder
- nach der Fertigstellung der spannenden Bearbeitung und insbesondere vor dem Aufwalzen der Schneckenverzahnung (20) die Funktionsbereiche (2a, b) gehärtet, insbesondere induktiv gehärtet werden.

4. Verfahren nach einem der vorhergehenden Ansprüche,
**dadurch gekennzeichnet, dass**
die Herstellung der Getriebewelle (1) von der Stange (18) erfolgt, indem eines der beiden Spannfutter (15a, b) axial durchgängig zur Bearbeitung von Stangen (18) ausgelegt ist und auf dem aus diesem Futter (15a) frei vorstehenden Bereich insbesondere der zweite Funktionsbereich (2b) zuerst aufgebracht wird, und anschließend das Werkstück abgelängt und an das andere Spannfutter (15a) zu Bearbeitung des ersten Funktionsbereiches (2a) übergeben wird.

5. Verfahren nach einem der vorhergehenden Ansprüche,
**dadurch gekennzeichnet, dass**
- durch Radialbohrungen (19) an definierten Umfangsstellen im ersten Funktionsbereich Sacklöcher als formschlüssige Sensoraufnahmen für die Drehstellung der Getriebewelle (1) eingebracht werden und/oder
- im zweiten Funktionsbereich (2b) auf dem Außenumfang (6b) eine Schneckenverzahnung (20) mittels Aufwalzen durch Kaltverformung hergestellt wird, insbesondere vor dem Härten der Getriebewelle (1).

6. Verfahren nach einem der vorhergehenden Ansprüche,
**dadurch gekennzeichnet, dass**
- das Aufwalzen der Schneckenverzahnung (20) mittels tangential entlang geführter Profilleisten (21 a, b)erfolgt und insbesondere
- nach dem Aufwalzen der Schneckenverzahnung (20) eine Nachbearbeitung der Schneckenverzahnung (20) durch Schleifen, Fräsen und gegebenenfalls des äußeren Umfanges durch Drehen erfolgt.

7. Getriebewelle (1) mit einem Funktionsbereich (2a, b) an jedem seiner beiden Enden (3a, b), wobei der erste Funktionsbereich (2a),
- einen zentrischen Innenumfang (4) mit einer Befestigungsmöglichkeit für einen darin aufzunehmenden Stab (5) umfasst sowie
- einen zentrischen Außenumfang (6) mit einer Axial-Anschlagfläche (7) an der freien Stirnfläche (9a, b), die in Umfangsrichtung verläuft, sowie Umfangs-Anschlagflächen, die in axialer Richtung (10) verlaufen und in der freien Stirnfläche münden und
wobei der zweite Funktionsbereich (2b) wenigstens eine zentrische Außen-umfangsfläche (11) als Lagerstelle sowie ein zentrisches Außengewinde (12) als Befestigungsgewinde aufweist,
**dadurch gekennzeichnet, dass**
- die in axialer Richtung (10) verlaufenden Umfangs-Anschlagflächen (8a) die Seitenwangen einer in axialer Richtung (10) verlaufenden Längsnut (22) sind,
- der Boden (22a) der Längsnut (22) in axialer Richtung (10) betrachtet eben und tangential zur axialen Richtung der Getriebewelle (1) angeordnet ist und
- die Längsnut (22) in der Aufsicht betrachtet ein halb-rundes hinteres Ende (22b) aufweist.

8. Getriebewelle nach Anspruch 7,
**dadurch gekennzeichnet, dass**
- die Befestigungsmöglichkeit im Innenumfang eine zentrische, zylindrische Press-Passung (13) ist und insbesondere
- die Press-Passung (13) eine axiale Bohrung von der Stirnseite her ist, die gegebenenfalls mittels nachfolgendem Längsdrehen zentriert ist, sowie durch abschließendes Reiben die gewünschte Genauigkeit besitzt, mindestens F7.

9. Getriebewelle nach einem der vorhergehenden Vorrichtungsansprüche,
**dadurch gekennzeichnet, dass**
- am Innenumfang, insbesondere am Beginn der Press-Passung (13), eine konische Schulter (16) als Zentrierung für die Weiterbearbeitung des Werkstückes vorhanden ist und/oder
- die Funktionsbereiche (2a, b) gehärtet, insbesondere induktiv gehärtet sind.

10. Getriebewelle nach einem der vorhergehenden Vorrichtungsansprüche,
**dadurch gekennzeichnet, dass**
- Radialbohrungen (19) an definierten Umfangsstellen im ersten Funktionsbereich als Sacklöcher und formschlüssige Sensoraufnahmen für die Drehstellung der Getriebewelle (1) eingebracht sind und/oder
- im zweiten Funktionsbereich (2b) auf dem Außenumfang (6b) eine Schnecken-Verzahnung (20) mittels Aufwalzen durch Kaltverformung vorhanden ist.
